(19) Europäisches Patentamt

European Patent Office

Office européen des brevets

(11) Veröffentlichungsnummer : **0 492 124 B1**

(12) **EUROPÄISCHE PATENTSCHRIFT**

(45) Veröffentlichungstag der Patentschrift :
**30.03.94 Patentblatt 94/13**

(51) Int. Cl.$^5$ : **C09D 17/00**, C09C 1/30

(21) Anmeldenummer : **91119599.8**

(22) Anmeldetag : **16.11.91**

(54) **Fällungskieselsäurepaste.**

(30) Priorität : **24.12.90 DE 4041827**

(43) Veröffentlichungstag der Anmeldung :
**01.07.92 Patentblatt 92/27**

(45) Bekanntmachung des Hinweises auf die
Patenterteilung :
**30.03.94 Patentblatt 94/13**

(84) Benannte Vertragsstaaten :
**BE DE ES FR GB NL**

(56) Entgegenhaltungen :
**EP-A- 0 350 035**
**DE-A- 2 728 490**
**DE-A- 3 330 447**
**WORLD PATENTS INDEX Week 7819, Derwent**
**Publications Ltd., London, GB; AN**
**78-34376/19; & JP-A-52 034 829**

(73) Patentinhaber : **Degussa Aktiengesellschaft**
**Weissfrauenstrasse 9**
**D-60311 Frankfurt (DE)**

(72) Erfinder : **Chojnowski, Marian**
**Georg-Büchner-Weg 20**
**W-6050 Offenbach (DE)**
Erfinder : **Nagel, Werner, Dr.**
**Vogelsbergstrasse 3 a**
**W-8755 Alzenau 2 (DE)**
Erfinder : **Meier, Karl**
**Roisdorfer Weg 5**
**W-5305 Alfter (DE)**
Erfinder : **Leonhardt, Wolfgang, Dr.**
**Röderbergweg 41**
**W-6000 Frankfurt 1 (DE)**
Erfinder : **Esch, Heinz**
**Kölnstrasse 367**
**W-5300 Bonn 1 (DE)**

EP 0 492 124 B1

**Beschreibung**

Die Erfindung betrifft eine Fällungskieselsäurepaste, das Verfahren zu deren Herstellung sowie ein Verfahren zur Hydrophobierung von Fällungskieselsäuren unter Verwendung der Fällungskieselsäurepaste.

Es ist bekannt Fällungskieselsäuren mit Silikonölen in trockenem Zustand zu hydrophobieren (DE-0S 26 28 975). Derartige hydrophobierte Fällungskieselsäuren werden als Entschäumerkieselsäuren in Waschmitteln eingesetzt.

Die nach dem bekannten Verfahren hydrophobierten Fällungskieselsäuren haben den Nachteil, daß das als Hydrophobierungsmittel eingesetzte Siliconöl nicht gleichmäßig auf der Oberfläche der Kieselsäure verteilt ist.

Es bestand somit die Aufgabe, mit Siliconöl hydrophobierte Fällungskieselsäuren herzustellen, die eine gleichmäßige Verteilung des Siliconöls aufweisen.

Gegenstand der Erfindung ist eine Fällungskieselsäurepaste, bestehend aus 5 bis 15 Gew.-% Fällungskieselsäure und 85 bis 95 Gew.-% Silikonöl

Die erfindungsgemäße Fällungskieselsäurepaste weist eine ausreichende Stabilität über mehrere Tage auf.

Ein weiterer Gegenstand der Erfindung ist ein Verfahren zur Herstellung der Fällungskieselsäurepaste, bestehend aus 5 bis 15 Gew.-% Fällungskieselsäure und 85 bis 95 Gew.-% Silikonöl, welches dadurch gekennzeichnet, ist, daß das Silikonöl vorlegt, unter Anwendung von Scherkräften die Fällungskieselsäure einarbeitet und diesen Dispergiervorgang solange fortsetzt, bis die erhaltene Fällungskieselsäurepaste eine ausreichende Stabilität aufweist.

Während der Dispergierung kann die Temperatur der Fällungskieselsäure von Raumtemperatur auf 50 °C erhöht werden.

Ein weiterer Gegenstand der Erfindung ist ein Verfahren zur Hydrophobierung von Fällungskieselsäuren unter Verwendung der erfindungsgemäßen Fällungskieselsäurepaste, bestehend aus 5 bis 15 Gew.-% Fällungskieselsäure und 85 bis 95 Gew.-% Silikonöl, welches dadurch gekennzeichnet ist, daß man einen Fällungskieselsäurefilterkuchen auf bekannte Weise verflüssigt, den pH-Wert neutral oder alkalisch, vorzugsweise auf den pH-Wert = g einstellt, die für die Hydrophobierung notwendige Menge an Fällungskieselsäurepaste unter Verwendung einer Schervorrichtung hinzugibt, eine Zeitlang nachschert, die Suspension sprühtrocknet, das getrocknete Produkt tempert und anschliessend mittels einer Luftstrahlmühle vermahlt.

Die Verflüssigung des Fällungskieselsäurefilterkuchens kann vorzugsweise gemäß DE-0S 24 14 478 durchgeführt werden.

Die Fällungskieselsäuresuspension kann einen Feststoffgehalt von 150 bis 180 g/l aufweisen. Als Schervorrichtung kann ein Ultra-Turrax oder eine Kothoff-Mischsirene eingesetzt werden.

Die erhaltene hydrophobierte Fällungskieselsäure weist eine gleichmäßige Beschichtung mit Silikonöl auf. Sie kann als Entschäumerkieselsäure in Waschmitteln eingesetzt werden.

Das erfindungsgemäße Verfahren hat den Vorteil, daß die Temperung mit dem unvermahlenen Produkt durchgeführt werden kann. Dadurch erhöht sich die Kapazität des Temperschrittes um den Faktor 2 bis 3.

Beispiele

In mehreren Versuchsreihen wird die erfindungsgemäße Suspensionshydrophobierung durchgeführt. Insbesondere der Einfluß des pH-Wertes der Suspension wurde näher betrachtet. Dazu wird ein VN3-Membran-Filterkuchen (ca. 23 % Feststoff) mittels Scherkräfte und Zusatz von verdünnter Salzsäure oder Schwefelsäure (Versuchsreihe A), demineralisiertem Wasser (Versuchsreihe B) und verdünnter Natronlauge (Versuchsreihe C) verflüssigt und auf die gewünschten pH-Werte (3, 6 und 9) eingestellt. In die erhaltenen Suspensionen werden im nächsten Schritt die berechneten Mengen der Hydrophobierungspaste eingetragen. Als Basis wird eine Silikonöl-Dosierung von 13,5 %, bezogen auf den Kieselsäure-Anteil (TS-Gehalt), der Suspension gewählt. Die Hydrophobierungspaste wird mittels der Misch-Sirene bei höchster Drehzahl eingearbeitet.

Die Gesamt-Scherzeit beträgt 45 Minuten. Danach wird die Suspension - ohne weiteren Filtrationsschritt - in eine Porzellanschale überführt und bei 105 °C im Trockenschrank getrocknet. Das getrocknete Produkt wird anschließend auf einer UPZ-Mühle (-mechanische Schlägermühle der Firma Alpine) vermahlen und unter Standard-Bedingungen (1 Stunde/350 °C) im Naber-Ofen getempert.

In Tabelle 1 sind aus den Versuchsreihen A - C repräsentative Versuche (Versuchsparameter/analytische Daten) zusammengefaßt. Man erkennt, daß die Suspensionshydrophobierung sowohl im alkalischen als auch im neutralen Bereich zu guter Hydrophobie - Methanolbenetzbarkeit > 60 % - führt, daß jedoch im sauren Bereich nur Produkte minderer Qualität erhalten werden.

Die weiteren Versuchsreihen werden daraufhin nur noch im Bereich "neutraler" beziehungsweise "alkalischer Verflüssigung" durchgeführt. In den Versuchsreihen D und E wird der Einfluß der Reihenfolge der Verfahrensschritte Temperung/Vermahlung auf die Produkt-Qualität untersucht. Dabei werden die Versuche wie beschrieben durchgeführt, wobei jedoch die weitere Bearbeitung nach dem Verfahrensschritt "Trocknung" aufgeteilt wird. Im ersten Fall wurde die "Vermahlung" mit anschließender "Temperung" vorgenommen. Im anderen Fall wird die Reihenfolge der letzten Verfahrensschritte umgekehrt.

In Tabelle 2 sind aus den Versuchsreihen D und E repräsentative Versuche (Versuchsparameter/analytische Daten) zusammengefaßt. Überraschend konnte nachgewiesen werden, daß die Reihenfolge der Verfahrensschritte "Temperung" und "Vermahlung" keinen Einfluß auf die Produktqualität hinsichtlich Hydrophobie hat. Demzufolge ist es möglich, im Verfahrensschritt "Temperung" das höhere Schüttgewicht des unvermahlenen Produktes auszunutzen und somit eine höhere Raum-Zeit-Ausbeute in diesem Verfahrensschritt zu erzielen.

## Technikums-Versuche

Die in den Labor-Versuchen gesammelten Erkenntnisse werden in Technikums-Versuchen überprüft. Zwecks besserer Überprüf- und Vergleichbarkeit wurden die Untersuchungen nur noch im alkalischen Bereich durchgeführt. Anstelle des Trocknungsaggregates "Trockenschrank" wird ein Sprühtrockner eingesetzt.

Dabei wird der Filterkuchen mittels Dissolverscheibe und verdünnter Natronlauge verflüssigt und auf pH 9 eingestellt. Anschließend wird die Belegung mit Silikonöl durch Zugabe der entsprechenden Menge Hydrophobierungspaste (13,5 % Silikonöl, bezogen auf die Trockensubstanz) im Verflüssigungsbehälter vorgenommen. Nach einer zusätzlichen Dispergierzeit von ca. 30 Min. wird die Suspension auf dem Sprühtrockner (Zentrifugal-Zerstäuber) sprühgetrocknet.

Dem Verfahrensschritt Sprühtrocknung folgt die Temperung des unvermahlenen Zwischenproduktes bei 350 °C. Das getemperte Produkt wird zum Abschluß einer Luftstrahl-Vermahlung unterzogen. In Tabelle 3 sind die repräsentativen Versuchsdaten sowie relevante analytische Daten der Technikumsversuche zusammengefaßt.

<u>Tabelle 1:</u> Versuchsreihen A-C; Versuchsparameter; analytische Daten

| Versuch | | A | B | C |
|---|---|---|---|---|
| **Suspension** | | | | |
| – Typ | | VN3 | VN3 | VN3 |
| – pH-Wert | | 3,0 | 5,8 | 9,0 |
| – TS-Gehalt | [%] | 16,2 | 16,5 | 14,0 |
| **Hydrophobierungsmittel** | | | | |
| – Silikonöl | | TG 50 | TG 50 | TG 50 |
| – Menge | [%] | 13,5 | 13,5 | 13,5 |
| **Trocknung** | | | | |
| – Aggregat | | Trockenschrank | | |
| – Zeit | [h] | 12 | 12 | 12 |
| – Temperatur | [°C] | 105 | 105 | 105 |
| **Temperung** | | | | |
| – Aggregat | | Naber-Ofen | | |
| – Zeit | [h] | 1 | 1 | 1 |
| – Temperatur | [°C] | 350 | 350 | 350 |
| **Reihenfolge** | | | | |
| – Temperung | | 2 | 2 | 2 |
| – Vermahlung | | 1 | 1 | 1 |
| **Analytische Daten** | | | | |
| – pH-Wert | | 3,35 | 7,52 | 10,3 |
| – Sears-Zahl | | | | |
| V1 | [ml] | 5,9 | 0,2 | 1,3 |
| V2 | [ml] | 4,2 | 0,8 | 0,8 |
| – Methanolbenetzbarkeit | [%] | 48,8 | 63,7 | 63,7 |

...

EP 0 492 124 B1

Tabelle 2: Versuchsreihen D und E; Versuchsparameter; analytische Daten

| Versuch | | D1 | D2 | E1 | E2 | E3 | E4 |
|---|---|---|---|---|---|---|---|
| Suspension | | | | | | | |
| - Typ | | VN3 | VN3 | VN3 | VN3 | VN3 | VN3 |
| - pH-Wert | | 5,1 | 5,1 | 8,5 | 8,5 | 8,5 | 8,5 |
| - TS-Gehalt | % | 18,0 | 18,0 | 13,3 | 13,3 | 15,3 | 15,3 |
| Hydrophobierungsmittel | | | | | | | |
| - Silikonöl | | TG 50 | TG 50 | TG 50 | TG 50 | TG 50 | TG 50 |
| - Menge | % | 13,5 | 13,5 | 13,5 | 13,5 | 13,5 | 13,5 |
| Trocknung | | | | | | | |
| - Aggregat | | | | Trockenschrank | | | |
| - Zeit | h | 12,0 | 12,0 | 12,0 | 12,0 | 12,0 | 12,0 |
| - Temperatur | | 105 | 105 | 105 | 105 | 105 | 105 |
| Temperung | | | | | | | |
| - Aggregat | | | | Naber-Ofen | | | |
| - Zeit | h | 1 | 1 | 1 | 1 | 1 | 1 |
| - Temperatur | °C | 350 | 350 | 350 | 350 | 350 | 350 |
| Reihenfolge | | | | | | | |
| - Temperung | | 1 | 2 | 2 | 1 | 1 | 2 |
| - Vermahlung | | 2 | 1 | 1 | 2 | 2 | 1 |
| Analytische Daten | | | | | | | |
| - pH-Wert | | 7,1 | 7,1 | 9,85 | 9,8 | 9,8 | 9,95 |
| - Sears-Zahl | | | | | | | |
| V1 | ml | 0,18 | 0,18 | 0,85 | 1,0 | 1,3 | 1,1 |
| V2 | ml | 0,8 | 0,6 | 0,8 | 0,8 | 0,9 | 0,7 |
| - Methanolbenetzbarkeit | % | 63,8 | 66,2 | 64,1 | 63,6 | 63,8 | 64,5 |

...

**Tabelle 3:** Technikumsversuche SPT 180/200; Versuchsparameter; analytische Daten

| Versuch | | SPT 180 | SPT 200 |
|---|---|---|---|
| Suspension | | | |
| – Typ | | VN3 | VN3 |
| – pH-Wert | | 9,0 | 9,1 |
| – TS-Gehalt | [%] | 16,1 | 18,6 (16,2) |
| | | | |
| Hydrophobierungsmittel | | | |
| – Silikonöl | | Cp 50 | Cp 50 |
| – Menge | [%] | 13,5 | 13,5 |
| | | | |
| Trocknung | | | |
| – Aggregat | | VTC-A-Versuchs-Sprühtrockner | |
| – Eintrittstemperatur | [°C] | 420 | 400 |
| – Austrittstemperatur | [°C] | 80 | 80 |
| | | | |
| Zwischenprodukt (sprühgetrocknet) | | | |
| – Wassergehalt | [%] | 5,2 | 4,4 |
| – pH-Wert | | 9,3 | 9,4 |
| – Leitfähigkeit | [µS] | – | 650 |
| – Siebrückstand: > 45 µm | [%] | 65,0 | 61,0 |
| > 63 µm | [%] | 35,0 | 34,0 |
| – C-Gehalt | [%] | 4,2 | 4,37 |
| – Stampfgewicht | [g/l] | 330 | 333 |
| | | | |
| Temperung | | | |
| – Aggregat | | D 10-Pilotreaktor | |
| – Temperatur | [°C] | 350 | 330 |
| – Zeit | [min] | 60 | 50 |
| | | | |
| Vermahlung | | | |
| – Aggregat | | Technikums-LS-Mühle | |
| – Mahldruck | [bar] | 3,5-4,0 | 3,5 |
| – Injektordruck | [bar] | 5,5 | 5,5 |
| – Durchsatz | [kg/h] | 20 | 20 |
| | | | |
| Endprodukt | | | |
| – Wassergehalt | [%] | | |
| – pH-Wert | | 10,7 | 10,5 |
| – mittlere Teilchengröße | [µm] | 3,5 | 5,1 |
| – C-Gehalt | [%] | 3,6 | 3,2 |
| – Stampfgewicht | [g/l] | 110 | 110 |
| – Sears- Zahl: V1 | [ml] | – | 4,1 |
| V2 | [ml] | 2,9 | 1,6 |
| – Methanolbenetzbarkeit | [%] | 65 | 67 |
| – BET-Oberfläche | [m$^2$/g] | 106 | 109 |

## Patentansprüche

1.  Fällungskieselsäurepaste, bestehend aus 5 bis 15 Gew.-% Fällungskieselsäure und 85 bis 95 Gew-% Silikonöl.

2.  Verfahren zur Herstellung der Fällungskieselsäurepaste gemäß Anspruch 1,
    **dadurch gekennzeichnet**,
    daß man das Silikonöl vorlegt, unter Anwendung von Scherkräften die Fällungskieselsäure einarbeitet und diesen Dispergiervorgang solange fortsetzt, bis die erhaltene Fällungskieselsäurepaste eine ausreichende Stabilität aufweist.

3.  Verfahren zur Hydrophobierung von Fällungskieselsäuren unter Verwendung der Fällungskieselsäurepaste nach Anspruch 1,
    **dadurch gekennzeichnet**,
    daß man einen Fällungskieselsäurefilterkuchen auf bekannte Weise verflüssigt, den pH-Wert neutral oder alkalisch einstellt, die für die Hydrophobierung notwendige Menge an Fällungskieselsäurepaste unter Verwendung einer Schervorrichtung hinzugibt, eine Zeitlang nachschert, die Suspension sprühtrocknet, das getrocknete Produkt tempert und anschliessend mittels einer Luftstrahlmühle vermahlt.

## Claims

1.  A precipitated silica paste consisting of 5 to 15% by weight precipitated silica and 85 to 95% by weight silicone oil.

2.  A process for the production of the precipitated silica paste claimed in claim 1, characterized in that the silicone oil is introduced first, the precipitated silica is then incorporated using shear forces and the dispersion process is continued until the precipitated silica paste obtained shows adequate stability.

3.  A process for hydrophobicizing precipitated silicas using the precipitated silica paste claimed in claim 1, characterized in that a precipitated silica filter cake is liquefied in known manner, the pH is adjusted to a neutral or alkaline value, the quantity of precipitated silica paste required for hydrophobicization is added using a shearing unit and, after shearing for a while, the suspension is spray-dried, the dried product is conditioned and is subsequently ground in an air jet mill.

## Revendications

1.  Pâte de silice précipitée constituée de 5 à 15 % en poids de silice précipitée et de 85 à 95 % en poids d'huile de silicone.

2.  Procédé de préparation de pâte de silice précipitée selon la revendication 1, caractérisé en ce qu'on place dans une cuve de l'huile de silicone en appliquant des forces de cisaillement, on incorpore la silice précipitée et on poursuit ce traitement de dispersion, jusqu'à ce que la pâte de silice précipitée obtenue présente une stabilité suffisante.

3.  Procédé pour rendre hydrophobes des silices précipitées en utilisant la pâte de silice précipitée selon la revendication 1, caractérisé en ce qu'on fluidifie de manière connue un gâteau de filtre pressé de silice précipitée, on ajuste le pH à la neutralité ou en milieu alcalin, on ajoute la quantité de pâte de silice précipitée nécessaire à rendre hydrophobe en utilisant un dispositif de cisaillement, on cisaille encore pendant un certain temps, on atomise la suspension, on traite thermiquement le produit séché et ensuite on broie au moyen d'un broyeur à jet d'air.